# EUROPEAN PATENT SPECIFICATION

(11) **EP 1 921 311 B1**
(45) Date of publication and mention of the grant of the patent: **22.07.2009**
(21) Application number: 07120343.4
(22) Date of filing: 09.11.2007
(51) Int. Cl.: F03D 11/00

(54) **Wind power plant**
Windkraftanlage
Éolienne

(30) Priority: 09.11.2006 FI 20060988
(43) Date of publication of application: 14.05.2008
(73) Proprietor: Winwind Oy, 00210 Helsinki (FI)
(72) Inventor: Böhmeke, Georg, 00210, Helsinki (FI)
(74) Representative: Helino, Timo Kalervo

(56) References cited:
- WO-A-00/68570
- WO-A-01/77526
- WO-A-99/40768

## Description

### FIELD OF THE INVENTION

The invention relates to a wind power plant as defined in the preamble of claim 1.

### BACKGROUND OF THE INVENTION

The traditional and most often used wind power plant comprises, at the top of the tower, a nacelle arranged to rotate horizontally and having a generator inside which is rotated by a horizontal-shaft rotor connected to the generator shaft. The electric power produced by the generator is conducted via an electric cable into the tower and from there on into the distribution network. Due to the fixed cable, the rotation of the nacelle relative to the tower is so restricted that, typically, the nacelle may only take 3 to 5 revolutions relative to the tower in one direction or the other. This rotation is enabled by means of an electric cable link suspended freely inside the tower and twisting about its axis as the nacelle rotates. If the nacelle tends to rotate, due to wind, more than what is permitted, it will be forced back substantially to the central position when required.

The problem with the prior art is the strength of the twisted electric cable in the arising conditions. The length of the cable link may be 5 to 10 meters. The power supplied via the cable may be in the range of megawatts. In these conditions, local warming spots will be produced in the twisted cable harness, in which spots the temperature may rise more than what is permitted in the traditional cables. Thus, more expensive and thicker special cables must be used as the cable. However, the thicker cables are less flexible, which means that the free rotation of the nacelle must still be restricted.

### OBJECTIVE OF THE INVENTION

The objective of the invention is to eliminate the drawbacks referred to above.

One specific objective of the invention is to disclose a novel cable solution which allows the use of less expensive, thinner and more flexible electric cables.

### SUMMARY OF THE INVENTION

The wind power plant in accordance with the invention is characterized by what has been presented in claim 1.

The wind power plant in accordance with the invention comprises a tower and, at the top of the tower, a nacelle rotating horizontally relative to the tower and comprising a generator and a rotor connected to the generator shaft. Furthermore, an electric cable is connected from the generator via the tower to the transmission network for conducting the produced electricity into application sites. The electric cable comprises a free link suspended inside the tower and allowing a substantially free rotation of the nacelle relative to the tower. In accordance with the invention, the area of the free link in the electric cable comprises, in the same harness with the electric cable, a cooling liquid circulation in which the circulating cooling liquid is specifically arranged to cool the twisted electric cable in the harness and to prevent an excessive warming thereof.

In a preferred and simple embodiment of the invention, the cooling liquid circulation comprises a liquid hose which contacts the electric cable in the area of the free link. The liquid hose may have continuous contact with the electric cable, i.e. it may be coupled to the electric cable, or it may be freely suspended near the electric cable and around it, so that, as the electric cable twists about its axis, the liquid hose will twist into the same harness with the electric cable.

It is also possible that the cooling liquid circulation is arranged in the area of the free suspended link of the electric cable as a circular liquid cover surrounding the electric cable, which in all situations cools the electric cable by means of the liquid cover flowing around the cable.

Although it is possible that the cooling liquid hose and the associated pump and heat exchange are supported on the tower, it is, however, preferred that the liquid hose be arranged as a to-and-fro cooling circulation starting from and coming back to the nacelle. In this case, all technical functions would take place in the nacelle and could be easily and simultaneously checked and serviced. The cooling liquid circulation is therefore preferably connected to a cooling construction already existing in the nacelle, such as for example the generator cooling. Thus, there will not be any need for separate pumps or heat exchangers for the liquid circulation cooling the electric cable.

The wind power plant in accordance with the invention provides considerable advantages compared to the prior art. The invention allows an efficient prevention of the excessive warming of the electric cable suspended inside the tower. Therefore, less expensive cables and also thinner cables can be used as the electric cable. Furthermore, the thinner cables that can be used are also more flexible, so that the nacelle can be permitted to rotate more in one direction which reduces the need for the forced controlling of the nacelle.

### LIST OF FIGURES

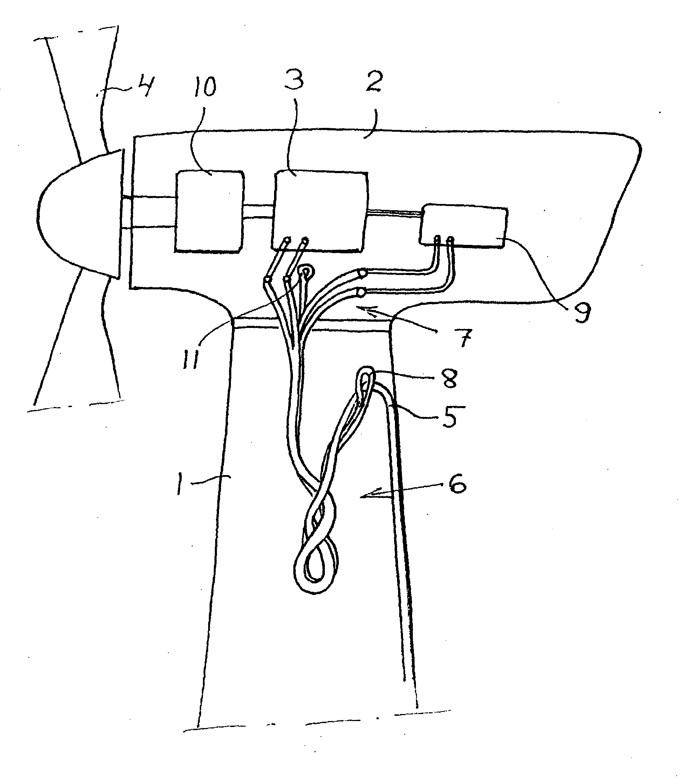

In the following section, the invention will be described in detail by means of an example, with reference to the accompanying drawing which schematically represents one cooling arrangement for an electric cable in accordance with the invention.

### DETAILED DESCRIPTION OF THE INVENTION

The figure shows a schematic representation of one construction in accordance with the invention as disposed in the wind power plant. The wind power plant comprises, at the top of a tower 1, a nacelle 2 supported such that it rotates horizontally, with a generator 3 inside the nacelle. Connected to the generator 3 via a gearbox 10 is a rotor 4. Also connected to the generator 3 is a cooling 9 for maintaining the operating temperature of the generator within the prescribed limits.

Extending from the generator inside the tower 1, and coupled to the tower, are electric cables 5 which conduct the electricity produced by the generator into transmission and distribution networks. Between the generator 3 and the tower 1, formed of the electric cable 5 and suspended freely inside the tower, is a cable link 6 suspended freely in the air inside the tower. The link is supported with a suspension 11 on a suitable position in the nacelle 2. The length of the link 6 may be for example about 10 meters in towers having a height of 50 to 100 meters. The suspension 11 thus supports the cable link and prevents the full weight of the link from falling onto the cable couplings.

In the area of the free link 6 of the cable and wrapped in conjunction of the cable and around it is a liquid hose 8 forming a cooling liquid circulation 7 around the cable in the area of the free link 6. The cooling liquid circulation 7 starts from and comes back to the cooler 9 of the generator 3. As the nacelle 2 rotates relative to the tower 1, the electric cable 5, together with the liquid hose 8 of the cooling liquid circulation 7, twists into a tight braiding. Thus, the cooling liquid which starts from and comes back to the cooler 9 circulates in the hose 8 and cools the cable, preventing it from warming excessively in the tight braiding.

The invention is not limited merely to the example referred to above; instead many variations are possible within the scope of the inventive idea defined by the claims.

## Claims

1. A wind power plant, comprising a tower (1), at the top of the tower a nacelle (2) rotating horizontally relative to the tower and comprising a generator (3) and a rotor (4) connected to the generator shaft, and an electric cable (5) connected to the transmission network from the generator via the tower for conducting the produced electricity to application sites, the electric cable comprising as suspended inside the tower a free link (6) allowing a substantially free rotation of the nacelle relative to the tower, **characterized in that** the area of the free link of the electric cable comprises a liquid hose (8) forming a cooling liquid circulation (7) which contacts the electric cable (5) in the area of the free link (6) and twists in the same harness with the electric cable (5) during rotation of the nacelle (2).

2. The wind power plant in accordance with claim 1, **characterized in that** the liquid hose (8) is arranged as a to-and-fro cooling circulation starting from and coming back to the nacelle (2).

3. The wind power plant in accordance with claim 1 or 2, **characterized in that** the cooling liquid circulation is connected to the cooling (9) of the generator (3) in the nacelle (2).

## Patentansprüche

1. Windkraftanlage, welche einen Turm (1), eine Gondel (2), welche sich auf dem Turm befindet, welche sich in Relation zu dem Turm horizontal dreht und einen Generator (3) und einen Rotor (4), welcher mit der Generatorwelle verbunden ist, enthält, und ein Elektrokabel (5), welches von dem Generator über den Turm mit einem Übertragungsnetz verbunden ist, um die erzeugte Elektrizität an Abnehmerstellen zu leiten, enthält, wobei das Elektrokabel, innerhalb des Turms aufgehängt, eine freie Verbindung (6) enthält, welche eine im Wesentlichen freie Umdrehung von der Gondel in Relation zu dem Turm ermöglicht, **dadurch gekennzeichnet, dass** der Bereich von der freien Verbindung des Elektrokabels einen Flüssigkeitsschlauch (8) enthält, welcher eine Kühlflüssigkeit-Zirkulation (7) ausbildet, welche mit dem Elektrokabel (5) in dem Bereich von der freien Verbindung (6) in Kontakt tritt und sich in dem gleichen Kabelstrang mit dem Elektrokabel (5) während der Umdrehung von der Gondel (2) verdreht.

2. Windkraftanlage nach Anspruch 1, **dadurch gekennzeichnet, dass** der Flüssigkeitsschlauch (8) als eine Hin-und-Her Kühlzirkulation angeordnet ist, beginnend von der Gondel (2) und daran zurückkehrend.

3. Windkraftanlage nach Anspruch 1 oder 2, **dadurch gekennzeichnet, dass** die Kühlflüssigkeit-Zirkulation mit der Kühlung (9) von dem Generator (3) in der Gondel (2) verbunden ist.

## Revendications

1. Eolienne comprenant une tour (1), une nacelle (2) en haut de la tour qui tourne horizontalement par rapport à la tour et qui comprend un générateur (3) et un rotor (4) relié à l'arbre de générateur, et un câble électrique (5) relié au réseau de transmission du générateur via la tour pour conduire l'électricité produite aux sites d'application, le câble électrique comprenant lorsqu'il est suspendu dans la tour, une jonction (6) libre permettant une rotation essentiellement libre de la nacelle par rapport à la tour, **caractérisée en ce que** la zone de la jonction libre du câble électrique comprend un tuyau pour liquide (8) formant une circulation de liquide de refroidissement (7) qui établit un contact avec le câble électrique (5) dans la zone de la jonction libre (6) et s'entortille dans le même faisceau que le câble électrique (5) pendant la rotation de la nacelle (2).

2. Eolienne selon la revendication 1, **caractérisée en ce que** le tuyau pour liquide (8) est disposé comme une circulation de refroidissement dans les deux sens à partir de et revenant à la nacelle (2).

3. Eolienne selon la revendication 1 ou 2, **caractérisée en ce que** la circulation de liquide de refroidissement est reliée au refroidissement (9) du générateur (3) dans la nacelle (2).
